# EUROPEAN PATENT SPECIFICATION

(11) **EP 3 510 513 B1**
(45) Date of publication and mention of the grant of the patent: **11.11.2020**
(21) Application number: 17787973.1
(22) Date of filing: 11.09.2017
(51) Int. Cl.: G06F 21/10, G06Q 30/06

(54) **A METHOD OF DATA PROCESSING AND PROVIDING ACCESS TO THE PROCESSED DATA ON USER HARDWARE DEVICES AND A SYSTEM CONNECTION**
VERFAHREN ZUR DATENVERARBEITUNG UND ZUM ZUGRIFF AUF DIE VERARBEITETEN DATEN AUF BENUTZERHARDWAREVORRICHTUNGEN UND SYSTEMVERBINDUNG
PROCÉDÉ POUR TRAITER DES DONNÉES ET DONNER ACCÈS AUX DONNÉES TRAITÉES SUR DES DISPOSITIFS MATÉRIELS D'UTILISATEURS ET UNE CONNEXION DE SYSTÈME

(30) Priority: 12.09.2016 SK 50242016
(43) Date of publication of application: 17.07.2019
(73) Proprietor: Jancosek, Michal, 900 44 Tomásov (SK); Bujnák, Martin, 851 07 Bratislava (SK); Buchalíková Bujnáková, Hana, 900 23 Vinicné (SK)
(72) Inventor: Jancosek, Michal, 900 44 Tomásov (SK); Bujnák, Martin, 851 07 Bratislava (SK); Bujñák, Tomás, deceased (SK)
(74) Representative: Cechvalova, Dagmar
(86) International application number: PCT/SK2017/050007
(87) International publication number: WO 2018/048361

(56) References cited:
- EP-A1- 1 065 593
- EP-A2- 0 704 785
- US-A- 5 982 891

## Description

### Field of invention

The invention relates to a method of data processing and providing access to the processed data on user hardware devices and the system connection implementing this method. The invention falls within the area of automated data processing and transmission technology.

### Prior art

The logic of data processing, software sale and payment for software use have been changing dramatically in the past few years, with the online software distribution getting streamlined, the Internet getting faster and the number of idle computers connected to the network increasing. This is connected with competitiveness, piracy, or software development streamlining. Well known are data processing and software sale methods described below.

There is data processing by way of so-called perpetual licenses, which allow user to purchase some software once and own it until the end of the lifetime of the software, the computer or the operating system it runs in. Typical software companies offer the possibility to purchase software upgrades on yearly basis for a certain percentage of the software price. One advantage of this system is that the user owns the software and can, theoretically, use it interminably. The advantage for the seller is that they receive the payment for the complete software in advance. The disadvantage of this system is a large initial investment for the purchaser and thus lower affordability of the software for a wider clientele. When it comes to some specialized software, their prices range in tens of thousands and thus the software stays in hands of few affluent companies. This translates to the price of data processing. A license is usually tied to a single computer, operating system, or a special hardware key. A transfer to another computer may not be possible. If the computer or the hardware key stops working, is replaced or ceases to support the operating system, it is necessary to purchase the software again. Software is also more attractive to pirates. They can distribute the cracked software illegally. The user can only use the functionality of the software available at the time of purchase, or depending on whether or not they have bought the software upgrade, i.e. if there is a new functionality in the software and they have not paid for the upgrade, or they skipped a payment, then they must purchase the complete software again for its full price.

Also known is software leasing. More and more businesses are switching from software sales to leasing. It has a number of benefits for both the companies and the end users. The price of the software is lower. It is possible to lease the software for various periods of time according to individual needs, for example for a day, a week, a month, a year. It is possible to release new features continuously and do not tie them to new versions of the software. This way the functionality is available to the user immediately. The protection against piracy is made simpler. From the management and cash flow point of view it is easier for companies to predict their revenues. The drawbacks of this system are as follows: Users do not perceive the product ownership. They are in a time stress trying to minimise their costs (they check when the license of their software ends). In some applications it is difficult to forecast the computation time. The price may still be too high, making the software unaffordable. For instance, the shortest leasing period may be a month, while 4 days would suffice.

Also known is a Cloud data processing method. Cloud data processing means to have data processed on a remote computer owned by a service provider. The following design pattern is typical of cloud processing: A user downloads an application (possibly a web-based application viewed in an Internet browser) and defines inputs and settings by means of the local application. The software sends the data for processing and at the same time defines a price for it, for example according to the volume of the data to be transferred, number of images or accounting items. The remote computer receives a batch of data to be processed, processes it on one of its servers and returns a result. This method is attractive because there is a large quantity of available servers and is widely applicable for various kinds of applications. Advantages of this system include that users do not load their computers, they do not even need to own a computer, compared to the need of having one if the application was running at home. If the service allows it, it provides you with the opportunity to use more computers simultaneously in order to shorten the computation time, or process more data in parallel. The user does not have to own the software and software client sending a batch of data is usually affordable. The disadvantages of this system include: The necessity to send data via the Internet. In some cases it can take more time to send and receive data than the computation itself at home. If it's sensitive data, there is a security risk. Majority of companies do not permit cloud processing due to security reasons, for example film studios. The price for processing reflects the computer price, software license price, cloud computer idle time price, amortization price, data transfer price, data holding price and, last but not least, the price of the service itself. It also includes the price of processing if it was not possible to compute the result due to an error in the software or input data.

Also known is the token payment method. Similar to slot machines, there are software applications in the software industry distributed free of charge or for a lower price, with users paying a one-time fee for the application use. The users purchase some tokens in advance and they use them to pay for the use. The benefits include no or low initial cost for the application. The user pays only for each actual use of the application. It is not necessary to transfer data to be processed online, which eliminates the data security risks, the software is affordable and therefore widely accessible. The user always works with the latest version. The drawbacks lie in that the users do not have the sense of ownership of the application. Users pay for tokens in advance, but on the other hand, it is their only expense. In case of offline tokens bought beforehand, the application becomes a target for pirates.

For the purpose of decreasing the costs for data processing, shortening the time of getting the result and increasing security of the processed data, an opportunity presented itself to solve the issue by technical means able to secure these requirements. The result of this effort is the method of data processing and providing access to the processed data on user hardware devices and the system connection according to this invention described in further detail bellow.

Prior art document EP0704785-A2 discloses a data copyright management system comprising a database for storing original data, a key control center for managing crypt keys, copyright management center for managing data copyrights, and a communication network for connecting these sections each other, the system supporting the following two methods: one for one-way supplying encrypted data to users by means of broadcasting or the like, and the other for two-way supplying encrypted data to users corresponding to users' requests. Document EP1065593-A1 discloses a process for securing the execution of a mobile code in a Information Handling System having a function which can be represented on a matrix, the function is being encrypted by means of an Error-Correcting Code transformation, where the code is preferably a GOPPA code.

### Description of the invention

The above-mentioned shortcomings are, to a substantial measure, eliminated by the method of data processing and providing access to the processed data on user hardware devices according to this invention, which can employ a PPR (pay-per-result) method - a payment for a transfer of ownership rights for content created on a personal computer - or a PPI (pay-per-input) method - a payment for the right to process the same input data repeatedly.

With the PPR (pay-per-result) method - a payment for transfer of ownership rights to a content created on one's own personal computer - the user processes data on their own computer with an application obtained for free or for a reduced price, and pays for the possibility to use the result further. When it comes to security and communication, the result is secured in a way that makes it impossible to get it trivially without making the payment. One example is data encryption, use of an operating system sandbox and so on. This is achieved by the processed data remaining encrypted by a code. The payment for the result is processed online or through another medium based on the digital signature which determines the price. A public key of the processed data is also sent to the server. The key cannot be used for a reverse reconstruction of the data processed by the user, and its size is negligible, in comparison with the input data. Based on this information, the server creates a request for payment. After payment the server produces a key used to decipher data with.

The substance of data processing and providing access to the processed data on user hardware devices according to the PPR (pay-per-result) method lies in that in the first step a computation application with a restricted functionality to purchase a result is downloaded to the user hardware devices.

After the first step, where the computation application with a restricted functionality to purchase a result is downloaded into the user hardware devices, there is an intermediate step in which data is processed on the user hardware devices to form a result/output (e.g. input digital photographs may be reconstructed to form a 3D model).

The application generates a unique signature for the result. The signature carries no information from which it would be possible to determine the sort of data, nor would it be possible to fully or partially reconstruct it. This signature is negligibly small, compared to the data that it describes.

In the second step, the description of a result is transferred between the user hardware devices and the operating server.

In the second step, the transferred description of a result may be also encrypted.

After the second step, if the description is encrypted, a transfer of the public key of the respective encrypting may take place in an intermediate step, as well.

After the second step, in which the result description is transferred from the user hardware devices to the operating server, there is an inserted intermediate step in which the price is calculated and the price quotation communication process takes place between the operating server and the user hardware devices, which is followed by a payment data transfer between the user hardware devices and a bank billing centre, which is then followed by a payment data verification transfer between the bank billing centre and the operating server.

In the third step, the decryption key is generated and transferred between the operating server and the user hardware devices for unlocking the restricted functionality.

In the fourth step, the restricted functionality is unlocked and/or the processed data is exported.

The above-mentioned method using the PPR (pay-per-result) procedure is also the basis of a system connection for processing and providing access to the processed data on user hardware devices, which comprises interconnected user hardware devices, the operating server and bank communication hardware. A computation and communication block of the user hardware devices is connected with a request block of the operating server. The request block of the operating server is interconnected with the calculation block of the operating server. The calculation block of the operating server is connected with the processing block of the user hardware devices and bank hardware. The processing block of the user hardware devices is connected with the payment block of the user hardware devices, which is connected with the bank hardware. The bank hardware is connected with the processing block of the operating server, which is connected with a confirmation/decryption key generation block of the operating server.

The PPI (pay-per-input) method - the payment for a repeated possibility to process the same data - is similar to the PPR (pay-per-result), but instead of paying for a result, a user purchases the possibility to repeatedly process (input) data by an application (e.g. in case of photogrammetry, digital images are considered to be input data). This may or may not be time-limited. Moreover, the model allows for a price difference to be paid, if the input has been extended, e.g. new images have been added. When it comes to security and communication, the result is secured in a way that makes it impossible to get it trivially without making the payment. Data can be encrypted in a way similar to that of PPR. Furthermore, unlike PPR, it allows for repeated processing of the same data. Thus it is necessary to describe the data and save this description at a remote server. The application generates a unique description for each input. This description carries no information which would make it possible to identify the nature of the data, nor to fully or partially reconstruct the data. This description is negligibly small, compared to the input. Unique input descriptions, a user identifier, as well as data needed to calculate the price are sent via Internet or another medium (e.g. a USB stick, a CD) to a server. The server retrieves from the description database ownership rights of the user and compares them against the sent input descriptions. If the user has the access rights, the server immediately returns a key to decrypt the data and unlock the functionality. If the user has partial or no rights bought, the server calculates the price for purchasing the rights. After payment, the server generates a key for data decryption. The server further extends the database with new user rights. The user identifier may or may not be sent, since the input data is unique. Rights pricing may vary. For example, it can be derived from the period for which a user purchases the rights. The right to process input data thus may or may not be time-limited. Purchasing of rights to the input may or may not include purchasing of rights to a subset of the input. For instance, a user makes a purchase of the rights to process photographs of a square. If they opt only for the images of a statue on the square and have them processed, the price for processing may be zero. Pricing of rights may also be bound to a specific algorithm. For instance, a user may purchase the right to compress videos by the MP4 algorithm. However, this way they do not get the right to compress videos by the WMV algorithm.

The essence of the extended method of data processing and providing access to the processed data on user hardware devices according to the PPI (pay-per-input) method lies in the fact that in a first step a computation application with a restricted functionality is downloaded to user hardware devices. The user does not necessarily have to purchase a result, they can also use the application to verify the implementation, or to learn how to use the software.

After the first step, in which the computation application having a restricted functionality is downloaded to user hardware devices, data may be processed on the user hardware devices in an inserted intermediate step. The user is also allowed to purchase the rights immediately, without any data processing.

In the second step, input description, which may be encrypted, is transferred between the user hardware devices and the operating server.

After the second step, in an inserted intermediate step, input description data is checked against a verification database of the operating server to verify the rights. If some or all of the rights are not confirmed, there is an inserted intermediate step in which the price is calculated and the price quotation communication process takes place between the operating server and the user hardware devices, which is followed by a payment data transfer between the user hardware devices and a bank billing centre, which is then followed by a payment data verification transfer between the billing bank centre and the operating server.

In the third step, the decryption key is generated and transferred between the operating server and the user hardware devices for unlocking the restricted functionality.

In the fourth step, the restricted functionality is unlocked and the processed data is exported.

Eventually, in the fifth step, the data about user's rights to the inputs is recorded to the verification database of the operating server.

If in the inserted intermediate step the rights are confirmed by the verification database of the operating server, in which the rights to the described data are verified, then in the third step, the decryption key is generated and transferred between the operating server and the user hardware devices for unlocking the restricted functionality. In the fourth step, the restricted functionality is unlocked and the processed data is exported. Eventually, in the fifth step, the data about user's rights may be recorded to the verification database of the operating server.

The above-mentioned method according to the PPI (pay-per-input) procedure is also the basis of an extended system connection for processing and providing access to the processed data on remote user hardware devices, which comprises interconnected user hardware devices, the operating server and bank communication hardware. A computation and communication block of the user hardware devices is connected with a request block of the operating server. The request block of the operating server is followed by the verification database with the first output of the confirmed ownership rights to the confirmation/decryption key generation block of the operating server and the second output of partial or no rights to the calculation block of the operating server. The calculation block of the operating server is connected with the processing block of the user hardware devices and the bank hardware. The processing block of the user hardware devices is connected with the payment block of user hardware devices, which is connected with bank hardware. Bank hardware is connected with the processing block of the operating server, which is connected with the confirmation/decryption key generation block of the operating server. The confirmation/decryption key generation block of the operating server is connected with the user hardware devices result database. The confirmation/decryption key generation block of the operating server is connected with the verification database.

For both PPR and PPI methods, the term "bank" may be defined as any institution, company, webpage, or service that is able to identify a user and holds information about their (monetary) credit, and can receive an authorization by the user to exchange the credit for a commodity. For example PayPal, Bitcoin, a virtual credit directly at the server, etc.

Advantages of software method of data processing and providing access to the processed data on user hardware devices and advantages of the system connection for processing and providing access to the processed data on user hardware devices according to the invention are apparent from their effects exhibited externally. Generally, it can be noted that the originality of the presented PPR (pay-per-result) method - payment for a transfer of ownership rights to the content created on user's own computer and the connection - may be made clear by the following comparisons:
The main difference from the freemium model is that the user obtains software with restricted functionality for free, or at a reduced price. To unlock further functionality, for example new levels in a game, they need to pay for the new tool. With the PPR model, a user gets a fully functional software for free, or at a reduced price, and pays for the possibility to use its result. Thus the payment is not tied to any new application functionality, but rather to the possibility to legally use the processed result if the user is satisfied with it and pays for it.

The main difference from token payment is that the user only pays for a result after they are satisfied with it. Thus they do not pay for the possibility to process data, but rather for the processed data.

The difference from the cloud processing is that the user processes data on their computer. This eliminates any risk of data abuse. The cloud price includes also data transfer and machine time. For example, with image processing methods, machine time cannot be easily predicted. Therefore the price is often increased to compensate for any estimation inaccuracy. I may process data in the highest quality just as well as to connect triangles lying on a flat surface. This will simplify the model, but prolong the computation. For this reason the price for processing is higher, even though the model quality is lower. PPR enables modelling software situations. Or as the case may be, a PPR user does not pay anything if they are not satisfied with the result.

The difference from the perpetual and the time-limited license is that the user does not pay for the application, but rather for a processed result. So the price is multiple times lower or completely null, and the application is affordable for everybody.

The originality of the presented PPI (pay-per-input) method - payment for a right to repeatedly process the same data and the connection - may be made clear by the following comparisons. With PPI, a user purchases the right to repeatedly process the same data, which makes the method absolutely unique.

The difference from the freemium model is that the user does not pay for any extra functionality, the extent of which is limited, but rather purchases the right to repeatedly process certain data. Similarly to the PPR model, the user gets a fully functional software for free, or for a reduced price.

The main difference from token payment is that the user does not pay for the possibility to use the application, but rather for the ability to process data. This ability is purchased after the fact, when seeing the result and being satisfied with it.

The difference from cloud processing is similar to that of the Pay-Per-Result model. Unlike with PPR, a digital signature of inputs is transferred to the server. This description is larger in size, in comparison with the data transferred by the PPR method, but still negligibly small compared to the amount of data transferred in cloud processing.

This method does not expose the data to any risks, because the signature carries no information from which it would be possible to fully or partially reconstruct the input data. Also with PPI, the user pays after they are satisfied with the result.

The difference from the perpetual and time-limited license is that the user does not pay for the application. So the price is multiple times lower or completely null, and the application is affordable for everybody.

The difference from PPR (Pay-Per-Result) lies in that the user may repeatedly process the same data in the application, while paying just once.

### Overview of images in the drawings

The method of data processing and providing access to the processed data on user hardware devices and the system connection according to this invention is further illustrated in the drawings.
Figure 1 shows a diagram of the method of data processing and providing access to the processed data on user hardware devices.
Figure 2 shows the system connection diagram of the PPR system for one-time data processing.
Figure 3 shows the system connection diagram for the PPI system for repeated data processing.

### Description of the preferred embodiments

It is understood that the individual embodiments of the present invention are shown by way of illustration only and not as limitations. Those skilled in the art will recognize, or be able to ascertain using no more than routine experimentation, many equivalents to the specific embodiments of the technical design of the present invention. Software equivalents are intended to be encompassed by the following claims. Those skilled in the art would have no problem optimally designing software systems and selecting component thereof, which is why these features were not dealt with in detail.

### Example 1

This example of a particular embodiment of the invention describes a method of data processing and providing access to the processed data on user hardware devices according to the PPR (pay-per-result) procedure. It is based on the fact that in the first step, a computation application with a restricted functionality for result purchasing is downloaded to the user hardware devices. In an inserted intermediate step, data is processed on the user hardware devices. In the second step, the description of an encrypted result and a public key is transferred between user hardware devices and an operating server. After the second step, in which the encrypted result description and the public key is transferred from user hardware devices to the operating server, there is an inserted intermediate step in which the price is calculated and the price quotation communication process takes place between the operating server and user hardware devices, which is followed by a payment data transfer between user hardware devices and a bank billing centre, which is then followed by a payment data verification transfer between the bank billing centre and the operating server. In the third step, the decryption key is generated and transferred between the operating server and the user hardware devices for unlocking the restricted functionality. In the fourth step, the restricted functionality is unlocked and the processed data is exported.

It can be demonstrated on a particular embodiment of the invention, in which, for example, a user using images in specialized software calculates a 3D model, checks the processing quality and, if satisfied with the result, pays and acquires the right to further use the model, i.e. to measure distances or volumes, or to export it to another software. For instance, such software export may be to a publicly well-known format such as *.obj or *.ply. The price depends on the number of images, complexity of the final model, etc. This model is especially applicable to specialized software which processes data and returns a result or an intermediate result, the user intervenes interactively and the software continues with data processing.

Other examples include:
- image, video and sound compression. A user inspects the result and purchases it if satisfied;
- synthetic image production (rendering);
- physical, electric, chemical, static, mechanical, medical and other simulations;
- algorithms for artificial intelligence training, etc.

### Example 2

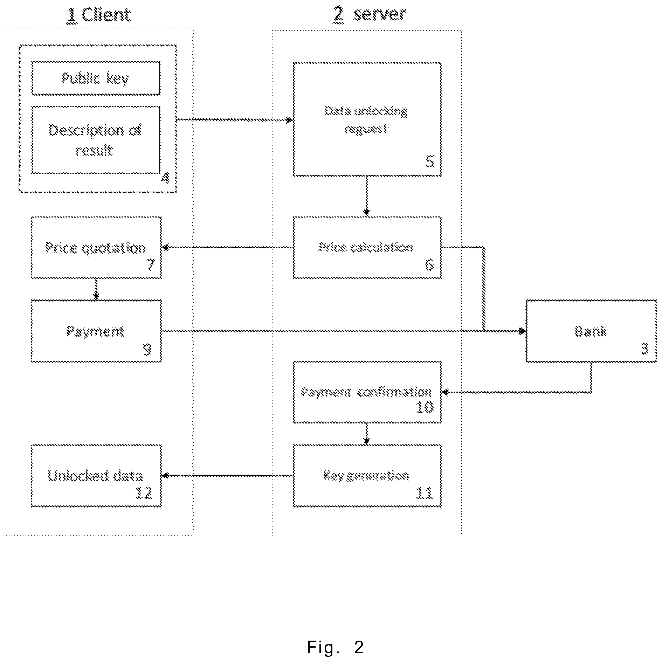

This example of a particular embodiment of the invention describes a system connection for processing and providing access to the processed data on user hardware devices based on the above mentioned method according to the PPR (pay-per-result) procedure described in Example 1. The system connection for processing and providing access to the processed data on user hardware devices is shown in Figure 2. It comprises mutually connected user hardware devices 1, an operating server 2 and bank communication hardware 3. A computation and communication block 4 of the user hardware devices 1 is connected with a request block 5 of the operating server 2. The request block 5 of the operating server 2 is connected with a calculation block 6 of the operating server 2. The calculation block 6 of the operating server 2 is connected with a processing block 7 of the user hardware devices 1 and the bank hardware 3. The processing block 7 of the user hardware devices 1 is connected with a payment block 9 of the user hardware devices 1, which is connected with the bank hardware 3. The bank hardware 3 is connected with a processing block 10 of the operating server 2, which is connected with a confirmation/decryption key generation block 11 of the operating server 2. The confirmation/decryption key generation block 11 of the operating server 2 is connected with a results database 12 of the user hardware devices 1.

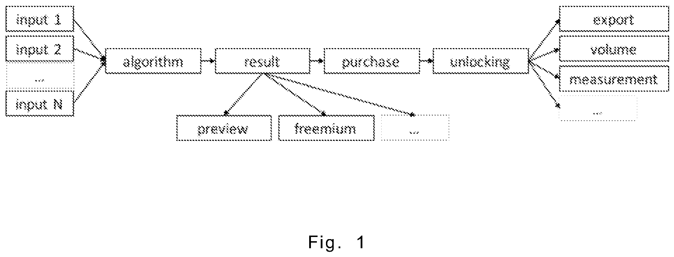

A functional model of the system connection for processing and providing access to the processed data on user hardware devices is described in further detail below and shown in Figure 1.

A user downloads/obtains an application for free or for a small fee. They can use the application freely. The user works with the application, while only the functionality, which can be deemed a processing result, is restricted. For example, the application would not show the number of people in an image if it is an application for counting people in images, unless the user has bought the result. The application may display a portion of results for free (a parallel to the freemium model). The application allows the user to verify the quality of results - either statistically or by way of previews. If the user is satisfied with the result, the application enables the result to be purchased. After the purchase, any functionality tied to the purchase of the result is unlocked. For example, data export, displaying the number of people in an image, access to the results of a simulation, etc.

### Example 3

This example of a particular embodiment of the invention describes an extended method of data processing and providing access to the processed data on user hardware devices according to the PPI (pay-per-input) procedure. It is based on the fact that in the first step, a computation application with a restricted functionality for result purchasing is downloaded to the user hardware devices. In the inserted intermediate step, data may be processed. In the second step, input descriptions (plus the public key, if the data is encrypted) are transferred between the user hardware devices and the operating server. After the second step, in the inserted intermediate step, the rights are verified based on the public key data, using a verification database of the operating server. If some or all of the rights are not confirmed, there is an inserted intermediate step in which the price is calculated and the price quotation communication process takes place between the operating server and the user hardware devices, which is followed by a payment data transfer between the user hardware devices and a bank billing centre, which is then followed by a payment data verification transfer between the billing bank centre and the operating server. In the third step, the decryption key is generated and transferred between the operating server and the user hardware devices for unlocking the restricted functionality. In the fourth step, the restricted functionality is unlocked and the processed data is exported. Eventually, in the fifth step, user rights data is recorded to the verification database of the operating server.

If in the inserted intermediate step the rights are confirmed by the verification database of the operating server, in which the rights are verified against public key data, then in the third step, the decryption key is generated and transferred between the operating server and the user hardware devices for unlocking the restricted functionality. In the fourth step, the restricted functionality is unlocked and the processed data is exported. Eventually, in the fifth step, the data about user's rights to process the described inputs may be recorded to the verification database of the operating server.

It can be demonstrated on a particular embodiment of the invention, in which a museum would photograph an object for the purposes of cultural heritage digitization and creation of its 3D replica. They will use software to create the 3D model. Then they use the three-dimensional model to create the replica. They will pay for the possibility to process the data. Later, for instance in a month, they will use the same images to compute the 3D model again. They do not need to pay for this 3D model again, because the user holds the right to process the data again. The data may be processed in a different quality, even with the latest version that offers new algorithms able to retrieve more information from the images.

### Example 4

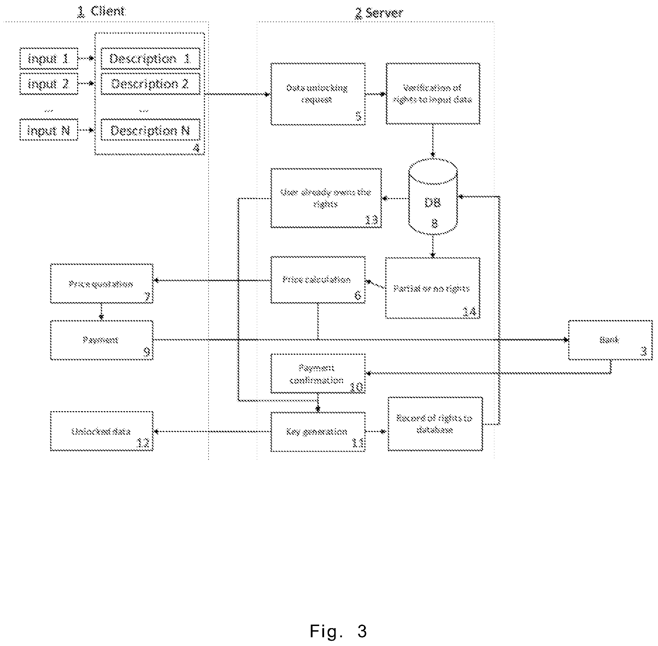

This example of a particular embodiment of the invention describes an extended system connection for processing and providing access to the processed data on user hardware devices based on the extended method according to the PPI (pay-per-input) procedure described in Example 3. The extended system connection for processing and providing access to the processed data on user hardware devices is shown in Figure 3. It comprises mutually connected user hardware devices 1, an operating server 2 and bank communication hardware 3. A computation and communication block 4 of the user hardware devices 1 is connected with a request block 5 of the operating server 2. The request block 5 of the operating server 2 is followed by the verification database 8 with the first output 13 of the confirmed ownership rights to the confirmation/decryption key generation block 11 of the operating server 2 and the second output 14 of partial or no rights to the calculation block 6 of the operating server 2. The calculation block 6 of the operating server 2 is connected with a processing block 7 of the user hardware devices 1 and the bank hardware 3. The processing block 7 of the user hardware devices 1 is connected with a payment block 9 of the user hardware devices 1, which is connected with the bank hardware 3. The bank hardware 3 is connected with a processing block 10 of the operating server 2, which is connected with a confirmation/decryption key generation block 11 of the operating server 2. The confirmation/decryption key generation block 11 of the operating server 2 is connected with a results database 12 of the user hardware devices 1. The confirmation/decryption key generation block 11 of the operating server 2 is connected with the verification database 8.

The functional model of the extended system connection for processing and providing access to the processed data on user hardware devices is described below and shown in Figure 1. Similarly to the PPR model, a user downloads/obtains an application for free, or for a small fee. They may freely use and work with the application, wherein only the functionality, which can be deemed a processing result, is restricted. The application allows the user to verify the quality of the result. Either statistically or by way of previews. If the user is satisfied with the result, the application allows them to purchase rights to process the input data by the software. Once the rights purchased, any functionality tied to the purchase of the result is unlocked. For example, data export, displaying the number of people in an image, access to the results of a simulation, etc. The application may display a portion of results for free (a parallel to the freemium model). If the user decides to process the same data again later on, for example with different software settings, the application allows them to do it for free. For example, if the user uses also some other new inputs, they will pay only the difference from the previous result.

### Industrial applicability

Industrial applicability of the said method of data processing and providing access to the processed data on user hardware devices and the system connection for the method according to the invention is a technology applicable to automated data processing.

## Claims

1. A method of data processing and providing access to the processed data on user hardware devices comprising:
- in the first step, calculation application, that processes input data into a result, with a restricted functionality limiting exporting and/or using the results, is downloaded to user hardware devices;
- in the second step, unique descriptions of inputs are transferred between user hardware devices and an operating server;
- in the third step, a decryption key is generated and transferred between the operating server and the user hardware devices for unlocking the restricted functionality;
- in the fourth step the restricted functionality is unlocked and/or processed data/at least one result is exported.

2. A method of data processing and accessing the processed data on user hardware devices according to Claim 1, wherein after the first step, in which a computation application with a restricted functionality limiting exporting and/or using the results is downloaded to the user hardware devices, in an inserted intermediate step, input data/inputs are processed on the user hardware devices to produce at least one result.

3. A method of data processing and accessing the processed data on user hardware devices according to any of the previous claims, wherein the unique descriptions of inputs, transferred between the user hardware devices and an operating server carry no information which would make it possible to identify the nature of the data, nor to fully or partially reconstruct the data.

4. The method of data processing and accessing the processed data on user hardware devices according to any of the previous claims, wherein the transfer of descriptions of inputs between the user hardware devices and the operating server in the second step, is encrypted.

5. A method of data processing and accessing the processed data on user hardware devices according to any of the previous claims, wherein after the second step, in which descriptions of inputs are transferred, there is also an inserted intermediate step in which also the public key of encrypted input descriptions and/or at least one result is transferred between the user hardware devices and the operating server.

6. A method of data processing and accessing the processed data on user hardware devices according to any of the previous claims, wherein after the second step, in which descriptions of inputs are transferred from the user hardware devices to the operating server, there is an inserted intermediate step in which the price is calculated and the price quotation communication process takes place between the operating server and the user hardware devices, which is followed by a payment data transfer between the user hardware devices and a bank billing centre, which is then followed by a payment data verification transfer between the bank billing centre and the operating server.

7. A method of data processing and accessing the processed data on user hardware devices according to any of Claims 1 to 5, wherein after the second step, in which descriptions of inputs are transferred from the user hardware devices to the operating server, there is inserted an intermediate step in which the rights to the data described by the descriptions transferred in the second step are verified and confirmed by means of a verification database of the operating server.

8. A method of data processing and accessing the processed data on user hardware devices according to Claim 6, wherein after the second step, in which descriptions of inputs are transferred from the user hardware devices to the operating server, and before the price calculation and the communication transfer about the price quotation between the operating server and the user hardware devices followed by payment data transfer between the user hardware devices, there is inserted an intermediate step in which the rights to the data described by the descriptions transferred in the second step are verified but not confirmed by means of a verification database of the operating server.

9. A method of data processing and accessing the processed data on user hardware devices according to any of Claims 1 to 5 wherein after the third step, in which a decryption key is generated and transferred between the operating server and user hardware devices for unlocking the restricted functionality and/or after the fourth step, in which the restricted functionality is unlocked and the processed data is exported, there is a fifth step, in which the data about user's rights to the inputs described by the transferred descriptions is recorded to the verification database of the operating server.

10. A method of data processing and accessing the processed data on user hardware devices according to any of the previous claims wherein only the price difference is to be paid, if the input has been extended.

11. A method of data processing and accessing the processed data on user hardware devices according to any of the previous claims wherein it allows for repeated processing of the same input data and using/exporting the results free of charge.

12. A method of data processing and accessing the processed data on user hardware devices according to any of the previous claims wherein input data are any of image, video or sound data.

13. A system for data processing and accessing the processed data on user hardware devices according to any of Claims 1 to 12 comprising interconnected user hardware devices (1), an operating server (2), and bank communication hardware (3), wherein the computation and communication block (4) of the user hardware devices (1) is connected with a request block (5) of the operating server (2); the request block (5) of the operating server (2) is connected with a calculation block (6) of the operating server (2); the calculation block (6) of the operating server (2) is connected with a processing block (7) of the user hardware devices (1) and the bank hardware (3); the processing block (7) of the user hardware devices (1) is connected with a payment block (9) of the user hardware devices (1), which is connected with the bank hardware (3); the bank hardware (3) is connected with a processing block (10) of the operating server (2), which is connected with a confirmation/decryption key generation block (11) of the operating server (2); the confirmation/decryption key generation block (11) of the operating server (2) is connected with a results database (12) of the user hardware devices (1).

14. A system for data processing and accessing the processed data on user hardware devices according to Claim 13 wherein the request block (5) of the operating server (2) is followed by the verification database (8) with the first output (13) of the confirmed ownership rights to the confirmation/decryption key generation block (11) of the operating server (2) and the second output (14) of partial or no rights to the calculation block (6) of the operating server (2).

15. The system for data processing and accessing the processed data on user hardware devices according to Claim 14 wherein the confirmation/decryption key generation block (11) of the operating server (2) is connected with the verification database (8).

## Patentansprüche

1. Methode zur Datenverarbeitung und zur Bereitstellung des Zugriffs auf verarbeitete Daten auf den Hardwaregeräten des Benutzers, die Folgendes beinhaltet:
- im ersten Schritt das Herunterladen einer Computeranwendung, welche die Eingangsdaten zum Ergebnis verarbeitet, mit beschränkter Funktionalität, die den Export und/oder die Verwendung der Ergebnisse einschränkt, in die Hardwaregeräte des Benutzers,
- im zweiten Schritt die Übertragung einzigartiger Beschreibungen der Eingaben zwischen den Hardwaregeräten des Benutzers und dem Betriebsserver,
- im dritten Schritt die Generierung und Übertragung eines Dechiffrierschlüssels zwischen dem Betriebsserver und den Hardwaregeräten des Benutzers zum Freischalten der eingeschränkten Funktionalität,
- im vierten Schritt das Freischalten der eingeschränkten Funktionalität und/oder der Export der verarbeiteten Daten/mindestens eines Ergebnisses.

2. Methode der Datenverarbeitung und der Bereitstellung verarbeiteter Daten auf den Hardwaregeräten des Benutzers gemäß Anspruch 1, wo nach dem ersten Schritt, in dem die Computeranwendung mit eingeschränkter Funktionalität, welche den Export und/oder die Verwendung der Ergebnisse einschränkt, in die Hardwaregeräte des Benutzers heruntergeladen wird, in einem eingeschobenen Zwischenschritt die Eingangsdaten/Eingaben auf den Hardwaregeräten des Benutzers verarbeitet werden, damit mindestens ein Ergebnis erreicht wird.

3. Methode der Datenverarbeitung und der Bereitstellung der verarbeiteten Daten auf den Hardwaregeräten des Benutzers nach einem der vorangegangenen Ansprüche, wobei die einzigartigen Beschreibungen der Eingaben, die zwischen den Hardwaregeräten des Benutzers und dem Betriebsserver übertragen werden, keine Informationen tragen, die eine Identifikation des Datencharakters oder eine vollständige bzw. teilweise Rekonstruktion der Daten ermöglichen würden.

4. Methode der Verarbeitung und Bereitstellung verarbeiteter Daten auf den Hardwaregeräten des Benutzers nach einem der vorangegangenen Ansprüche, wobei die Übertragung der Beschreibung der Eingaben zwischen den Hardwaregeräten des Benutzers und dem Betriebsserver im zweiten Schritt chiffriert ist.

5. Methode der Verarbeitung und Bereitstellung verarbeiteter Daten auf den Hardwaregeräten des Benutzers nach einem der vorangegangenen Ansprüche, wo nach dem zweiten Schritt, in dem die Beschreibungen der Eingaben übertragen werden, ebenfalls ein Zwischenschritt eingeschoben wird, in dem ebenfalls ein öffentlicher Schlüssel chiffrierter Beschreibungen von Eingaben und/oder mindestens ein Ergebnis zwischen den Hardwaregeräten des Benutzers und dem Betriebsserver übertragen wird.

6. Methode der Verarbeitung und Bereitstellung verarbeiteter Daten auf den Hardwaregeräten des Benutzers nach einem der vorangegangenen Ansprüche, wo nach dem zweiten Schritt, in dem Beschreibungen der Eingaben von den Hardwaregeräten des Benutzers auf den Betriebsserver übertragen werden, ein Zwischenschritt eingefügt wird, in dem der Preis berechnet wird und ein Kommunikationsprozess zum Preisangebot zwischen dem Betriebsserver und den Hardwaregeräten des Benutzers erfolgt, nach dem eine Übertragung der Zahlungsdaten zwischen den Hardwaregeräten des Benutzers und dem Billing-(Abrechnungs-) Zentrum der Bank folgt, wonach die Übertragung der Verifikation der Zahlungsdaten zwischen dem Billing- (Abrechnungs-) Zentrum der Bank und dem Betriebsserver folgt.

7. Methode der Verarbeitung und Bereitstellung verarbeiteter Daten auf den Hardwaregeräten des Benutzers nach einem der Ansprüche 1 bis 5, wo nach dem zweiten Schritt, in dem die Beschreibungen der Eingaben von den Hardwaregeräten des Benutzers auf den Betriebsserver übertragen werden, ein Zwischenschritt eingefügt wird, in dem die Rechte auf die mit der Hilfe von in dem zweiten Schritt übertragenen Beschreibungen beschriebenen Daten über eine Authentifizierungsdatenbank des Betriebsservers verifiziert und bestätigt werden.

8. Methode der Verarbeitung und Bereitstellung verarbeiteter Daten auf den Hardwaregeräten des Benutzers nach Anspruch 6, wo nach dem zweiten Schritt, in dem Beschreibungen der Eingaben von den Hardwaregeräten des Benutzers auf den Betriebsserver übertragen werden, und vor der Preisberechnung und dem Kommunikationsprozess zum Preisangebot zwischen dem Betriebsserver und den Hardwaregeräten des Benutzers, nach dem eine Übertragung der Zahlungsdaten zwischen den Hardwaregeräten des Benutzers folgt, ein Zwischenschritt eingefügt wird, in dem die Rechte an die durch die Beschreibungen beschriebenen Daten verifiziert, aber nicht durch die Authentifizierungsdatenbank des Betriebsservers bestätigt werden.

9. Methode der Verarbeitung und Bereitstellung verarbeiteter Daten auf den Hardwaregeräten des Benutzers nach einem der Ansprüche 1 bis 5, wo nach dem dritten Schritt, in dem der Dechiffrierschlüssel generiert und zwischen dem Betriebsserver und den Hardwaregeräten des Benutzers zur Freischaltung der eingeschränkten Funktionalität übertragen wird, und/oder nach dem vierten Schritt, in dem die eingeschränkte Funktionalität freigeschaltet und die verarbeiteten Daten exportiert werden, ein fünfter Schritt existiert, in dem die Daten zu den Rechten des Benutzers an den Eingaben, die mit Hilfe der übertragenen Beschreibungen beschrieben werden, in der Authentifizierungsdatenbank des Betriebsservers aufgezeichnet werden.

10. Methode der Verarbeitung und Bereitstellung verarbeiteter Daten auf den Hardwaregeräten des Benutzers nach einem der vorangegangenen Ansprüche, wobei nur die Preisdifferenz gezahlt wird, wenn die Eingabe erweitert wurde.

11. Methode der Verarbeitung und Bereitstellung verarbeiteter Daten auf den Hardwaregeräten des Benutzers nach einem der vorangegangenen Ansprüche, wobei eine wiederholte Verarbeitung der gleichen Eingangsdaten und eine unentgeltliche Verwendung/Export der Ergebnisse ermöglicht wird.

12. Methode der Verarbeitung und Bereitstellung verarbeiteter Daten auf den Hardwaregeräten des Benutzers nach einem der vorangegangenen Ansprüche, wobei es sich bei den Eingangsdaten um beliebige Bild-, Video- oder Audiodaten handelt.

13. System zur Datenverarbeitung und Bereitstellung der verarbeiteten Daten auf den Hardwaregeräten des Benutzers nach einem der Ansprüche 1 bis 12, welches die miteinander verbundenen Hardwaregeräte (1) der Benutzer, den Betriebsserver (2) und die Hardwarekommunikationsmittel (3) der Bank einschließt, wo der Rechnen- und Kommunikationsblock (4) der Hardwaregeräte (1) des Benutzers mit dem Anforderungsblock (5) des Betriebsservers (2) verbunden ist; wobei der Anforderungsblock (5) des Betriebsservers (2) mit dem Kalkulationsblock (6) des Betriebsservers (2) verbunden ist; wobei der Kalkulationsblock (6) des Betriebsservers (2) mit dem Verarbeitungsblock (7) der Hardwaregeräte (1) des Benutzers und mit den Hardwaremitteln (3) der Bank verbunden ist; wobei der Verarbeitungsblock (7) der Hardwaregeräte (1) des Benutzers mit dem Zahlungsblock (9) der Hardwaregeräte (1) des Benutzers verbunden ist, der mit den Hardwaremitteln (3) der Bank verbunden ist; wobei die Hardwaremittel (3) der Bank mit dem Verarbeitungsblock (10) des Betriebsservers (2) verbunden sind, der mit dem Block (11) der Bestätigung/Generierung des Dechiffrierschlüssels des Betriebsservers (2) verbunden ist; wobei der Block (11) der Bestätigung/Generierung des Dechiffrierschlüssels des Betriebsservers (2) mit der Datenbank (12) der Ergebnisse der Hardwaregeräte (1) des Benutzers verbunden ist.

14. System zur Datenverarbeitung und Bereitstellung verarbeiteter Daten auf den Hardwaregeräten des Benutzers nach Anspruch 13, wo hinter dem Anforderungsblock (5) des Betriebsservers (2) eine Authentifizierungsdatenbank (8) mit der ersten Ausgabe (13) des bestätigten Eigentums der Rechte am Block (11) der Bestätigung/Generierung des Dechiffrierschlüssels des Betriebsservers (2) und mit der zweiten Ausgabe (14) partieller oder keiner Rechte am Kalkulationsblock (6) des Betriebsservers (2) angeordnet wird.

15. System zur Datenverarbeitung und Bereitstellung verarbeiteter Daten auf den Hardwaregeräten des Benutzers nach Anspruch 14, wo der Block (11) der Bestätigung/Generierung des Dechiffrierschlüssels des Betriebsservers (2) mit der Authentifizierungsdatenbank (8) verbunden ist.

## Revendications

1. La méthode de le traitement des données et la mise de disposition d'accès aux données traitées par matériels informatiques de l'utilisateur qui comprend:
- premièrement, le téléchargement de l'application informatique qui traite des données d'entrée donne résultat à fonctionnalité limitée d'exportation et/ ou d'application des résultats aux matériel informatiques de l'utilisateur,
- deuxièmement, la transmission des étiquettes uniques des entrées entre les matériel informatiques de l'utilisateur et le serveur de service,
- troisièmement, la génération et la transmission de la clé de décryptage entre le serveur de service et les ,matériels informatiques de l'utilisateur afin de débloquer la fonctionnalité limitée,
- quatrièmement, l'accès à la fonctionnalité limitée et/ ou l'exportation des données traitées/ d'un résultat au minimum.

2. La méthode de le traitement des données et la mise de disposition d'accès aux données traitées par matériels informatiques de l'utilisateur selon la revendication 1 où après la première étape du téléchargement de l'application informatique à fonctionnalité limitée de l'exportation et/ ou d'application des résultats aux matériels informatiques de l'utilisateur, les données d'entrées/entrées sont traités en étape intermédiaire insérée par matériels informatiques de l'utilisateur pour avoir au moins un résultat.

3. La méthode de le traitement des données et la mise de disposition d'accès aux données traitées par matériels informatiques de l'utilisateur selon quelleconque des revendications sus-visées où les étiquettes uniques des entrées transmises entre les appareils informatiques de l'utilisateur et le serveur de production ne portent aucune information capable de mener à identifier la nature des données ou de reconstruire les données de manière totale ou partielle.

4. La méthode de le traitement des données et la mise de disposition d'accès aux données traitées par matériels informatiques de l'utilisateur selon quelleconque des revendications sus-visées où dans la deuxième étape, la transmission de descriptions des entrées entre les matériels informatiques de l'utilisateur et le serveur de service, est codée.

5. La méthode de le traitement des données et la mise de disposition d'accès aux données traitées par matériels informatiques de l'utilisateur selon quelleconque des revendications sus-visées où après la deuxième étape lors de laquelle se produit la transmission des étiquettes des entrées, il y a encore une étape intermédiaire insérée lors de laquelle, une clé publique des étiquettes codées des entrées et/ ou au moins un résultat, est transmise entre les matériels informatiques de l'utilisateur et le serveur de service.

6. La méthode de le traitement des données et la mise de disposition d'accès aux données traitées par matériels informatiques de l'utilisateur selon quelleconque des revendications sus-visées où après la deuxième étape, lors de laquelle sont transmises les étiquettes des entrées des matériels informatiques de l'utilisateur au serveur de service, une étape intermédiaire est insérée lors de laquelle le prix est calculé et il se produit une communication du devis entre le serveur de service et les matériels informatiques de l'utilisateur qui aboutit à la transmission des données de paiement entre les matériels informatiques de l'utilisateur et le centre de facturation de la banque et après à la transmission de la vérification des données de paiement entre le centre de facturation de la banque et le serveur de service.

7. La méthode de le traitement des données et la mise de disposition d'accès aux données traitées par matériels informatiques de l'utilisateur selon quelleconque des revendications 1 -5 où après la deuxième étape, lors de laquelle sont transmises les étiquettes des entrées des matériels informatiques de l'utilisateur au serveur de service, une étape intermédiaire est insérée dans laquelle les droits aux données décrites par étiquettes transmises à la deuxième étape sont vérifiés et confirmés par base de données de vérification du serveur de service.

8. La méthode de le traitement des données et la mise de disposition d'accès aux données traitées par matériels informatiques de l'utilisateur selon la revendication 6 où après la deuxième étape lors de laquelle les étiquettes des entrées sont transmises des matériels informatiques de l'utilisateur au serveur de service et avant le calcul du prix et la transmission du devis entre le serveur de service et les matériels informatiques de l'utilisateur, après laquelle il se produit la transmission des données de paiement entre les matériels informatiques de l'utilisateur, une étape intermédiaire est insérée dans laquelle sont vérifiés les droits aux données décrites par étiquettes de la deuxième étape mais ils ne sont pas confirmés par base de données de vérification du serveur de service.

9. La méthode de le traitement des données et la mise de disposition d'accès aux données traitées par matériels informatiques de l'utilisateur selon les revendications 1 -5 où après la troisième étape lors de laquelle la clé de décryptage est générée et transmise entre le serveur de service et les matériels informatiques de l'utilisateur pour débloquer la fonctionnalité limitée et / ou après la quatrième étape lorsque la fonctionnalité est débloquée et les données traitées sont exportées, il se présente une cinquième étape lors de laquelle des données des droits de l'utilisateur aux entrées décrites par étiquettes sont enregistrées à la base de données de vérification du serveur de service.

10. La méthode de le traitement des données et la mise de disposition d'accès aux données traitées par matériels informatiques de l'utilisateur selon quelleconque des revendications sus-visées étant donnée que le paiement à verser correspond à la différence des prix lorsque l'entrée est élargie.

11. La méthode de le traitement des données et la mise de disposition d'accès aux données traitées par matériels informatiques de l'utilisateur selon quelleconque des revendications sus-visées, étant donné que le retraitement des mêmes données d'entrée et l'application/ exportation gratuite des résultats sont autorisées.

12. La méthode de le traitement des données et la mise de disposition d'accès aux données traitées par matériels informatiques de l'utilisateur selon quelleconque des revendications sus-visées étant donné que les données d'entrée sont des données quelleconques audio, vidéo et d'images.

13. Le système de le traitement des données et la mise de disposition d'accès aux données traitées par matériels informatiques de l'utilisateur selon quelleconque des revendications 1 -12 comprenant des matériels informatiques (1) interconnectés d'utilisateur, le serveur de service (2), des moyens informatiques de communication (3) de banque, où le bloc informatique et de communication (4) des matériels informatiques (1) de l'utilisateur est connecté au bloc de demande (5) du serveur de service (2); étant donné que le bloc de demande (5) du serveur de servise (2) est connecté au bloc de calcul (6) du serveur de servise (2); et le bloc de calcul (6) du serveur de servise (2) est connecté au bloc de traitement (7) des matériels informatiques (1) de l'utilisateur et aux moyens informatiques (3) de la banque; étant donnée que le bloc de traitement (7) des matériels informatiques (1) de l'utilisateur est connecté au bloc de paiement (9) des matériels informatiques (1) de l'utilisateur, qui est connecté aux moyens informatiques (3) de la banque; les moyens informatiques (3) de la banque étant connectés au bloc de traitement (10) du serveur de service (2) qui est connecté au bloc (11) de confirmation/ génération de la clé de décryptage du serveur de service (2); le bloc (11) de confirmation/ génération de la clé de décryptage du serveur de service (2) étant connecté à la base de données (12) des résultats des matériels informatiques (1) de l'utilisateur.

14. Le système de le traitement des données et la mise de disposition d'accès aux données traitées par matériels informatiques de l'utilisateur selon la revendication 13 où après le bloc de demande (5) du serveur de service (2) est placée la base de données de vérification (8) avec la première sortie (13) des droits de possession confirmée relative au bloc (11) de confirmation/ génération de la clé de décryptage du serveur de service (2) et avec la deuxième sortie (14) des droits nuls ou partiels au bloc de calcul (6) du serveur de service (2).

15. Le système de le traitement des données et la mise de disposition d'accès aux données traitées par matériels d'informatique de l'utilisateur selon la revendication 14, où le bloc (11) de confirmation/ génération de la clé de décryptage du serveur de service (2) est connecté à la base de données de vérification (8).
